**Europäisches Patentamt**

**European Patent Office**

**Office européen des brevets**

(19)

(11) Veröffentlichungsnummer: **0 233 350**
**B1**

(12) **EUROPÄISCHE PATENTSCHRIFT**

(45) Veröffentlichungstag der Patentschrift:
18.10.89

(51) Int. Cl.⁴: **C11D 3/39**, D06L 3/02

(21) Anmeldenummer: 86117411.8

(22) Anmeldetag: 15.12.86

(54) Silikat- und magnesiumfreie Peroxidstabilisatoren.

(30) Priorität: 23.12.85 DE 3545909

(43) Veröffentlichungstag der Anmeldung:
26.08.87 Patentblatt 87/35

(45) Bekanntmachung des Hinweises auf die Patenterteilung:
18.10.89 Patentblatt 89/42

(84) Benannte Vertragsstaaten:
AT BE CH DE FR GB IT LI LU NL SE

(56) Entgegenhaltungen:
EP-A- 0 076 166
EP-A- 0 186 990
DE-A- 3 423 452
FR-A- 2 175 922
FR-A- 2 301 627
FR-A- 2 342 365

(73) Patentinhaber: Henkel Kommanditgesellschaft auf
Aktien, Postfach 1100 Henkelstrasse 67,
D-4000 Düsseldorf-Holthausen(DE)

(72) Erfinder: Bähr, Bernd-Dieter, Gillbachstrasse 27,
D-4040 Neuss 1(DE)
Erfinder: Rall, Ulrich, Dr., Kolpingstrasse 21,
D-4018 Langenfeld(DE)
Erfinder: van Delden, Hildegard, Zur Verlach 50,
D-4010 Hilden(DE)
Erfinder: Lillotte, Wolfgang, Stadtwaldstrasse 65,
D-4050 Mönchengladbach(DE)

## Beschreibung

Die Erfindung betrifft silikat- und magnesiumfreie Wirkstoffgemische zur Stabilisierung wäßriger Peroxidbleichbäder sowie ein Verfahren zum Bleichen von Cellulosefasern, gewünschtenfalls in Kombination mit synthetischen Fasern, mit wäßrigen Wasserstoffperoxidlösungen, die mit silikat- und magnesiumfreien Wirkstoffgemischen stabilisiert sind.

Cellulosefasern sowie Mischungen bestehend aus Cellulose- und Synthesefasern werden häufig mit Wasserstoffperoxid im alkalischen Medium gebleicht. Alkalische Peroxidbäder sind jedoch nicht stabil; ihre Zersetzungsgeschwindigkeit nimmt mit steigender Temperatur zu, so daß Stabilisatorzusätze notwendig sind, um das Peroxid möglichst verlustfrei für die Bleiche ausnutzen zu können. Für die ätzalkalische Peroxidbleiche werden üblicherweise Stabilisatoren auf der Basis von Wasserglas in Kombination mit Magnesiumionen verwendet.

Wasserglashaltige Stabilisatoren besitzen eine hervorragende antikatalytische Wirkung gegenüber Schwermetallen wie Eisen, Kupfer, Nickel, Mangan sowie deren Verbindungen. Diese können durch das Wasser, die Chemikalien, die Apparatur oder auch das Bleichgut in das Bleichbad gelangen und eine katalytische Zersetzung des Peroxids verursachen, was wiederum Faserschädigungen zur Folge hat. Als weitere Vorteile wasserglashaltiger Stabilisatormischungen sind hervorragende Bleicheffekte sowie Schalenfreiheit der Cellulosefaseranteile zu nennen. Schwerwiegende Nachteile der silikathaltigen Stabilisatoren bestehen jedoch darin, daß bei hartem Wasser Calcium- und/oder Magnesium-Silikate ausgeschieden werden, die in der Folge zu einem harten Griff und Fleckenbildungen auf der Ware sowie auch zu Schwierigkeiten beim Färben und Drucken führen. Weiterhin können an den Maschinenaggregaten unerwünschte Silikatablagerungen auftreten. Beim Bleichen stärkegeschlichteter Ware, die vorher nicht enzymatisch entschlichtet worden ist, werden trotz Einsatzes von Natriumpersulfat ungenügende Entschlichtungseffekte erzielt.

Diese Nachteile silikathaltiger Stabilisatoren haben dazu geführt, daß eine Vielzahl silikatfreier Stabilisatoren auf rein organischer Basis entwickelt wurden. So sind beispielsweise aus DE-PS 22 11 578 organische Stabilisatormischungen bekannt, die sich aus Amino-niedrigalkanphosphonsäuren, Polyhydroxy- oder Hydroxycarbonsäuren und Polyaminocarbonsäuren zusammensetzen. Im Vergleich zu silikathaltigen Stabilisatoren werden mit solchen silikatfreien Mischungen jedoch nach wie vor nicht die gewünschten Effekte hinsichtlich Entschlichtung, Weißgrad und Enddurchschnittspolymerisationsgrad erzielt. Die Aufgabe der vorliegenden Erfindung bestand daher in der Bereitstellung Silikat- und magnesiumfreier Stabilisatormischungen, die hinsichtlich Entschlichtung, Weißgrad und resultierendem Durchschnittspolymerisationsgrad nicht die beschriebenen Nachteile silikatfreier Stabilisatormischungen besitzen.

Überraschenderweise wurde nun gefunden, daß wasserstoffperoxidhaltige Lösungen, die mit Wirkstoffgemischen, enthaltend A) Polyhydroxy- und/oder Hydroxycarbonsäuren, gewünschtenfalls in Form ihrer Alkali- und/oder Ammoniumsalze, B) Polyacrylsäuren, gewünschtenfalls in teilneutralisierter Form und C) Polyamin- und/oder Aminpolyphosphonsäuren, gewünschtenfalls in Form ihrer Alkali- und/oder Ammoniumsalze, wobei das Gewichtsverhältnis der Komponenten A : B : C = 1 - 6 : 0,2 - 1 : 0,4 - 4 beträgt, stabilisiert wurden, im Vergleich zu bekannten silikatfreien Stabilisatormischungen deutlich bessere Effekte hinsichtlich Entschlichtung, Weißgrad und Enddurchschnittspolymerisationsgrad und gegenüber silikathaltigen Stabilisatoren vergleichbare Effekte zeigen.

Gegenstand der Erfindung sind somit silikat- und magnesiumfreie Wirkstoffgemische zur Stabilisierung wäßriger Peroxidbleichbäder auf Basis organischer Säuren und/oder ihrer Salze, dadurch gekennzeichnet, daß sie als wesentliche Komponenten A) Polyhydroxy- und/oder Hydroxycarbonsäuren, gewünschtenfalls in Form ihrer Alkali- und/oder Ammoniumsalze, B) Polyacrylsäuren, gewünschtenfalls in teilneutralisierter Form und C) Polyamin- und/oder Aminpolyphosphonsäuren, gewünschtenfalls in Form ihrer Alkali- und/oder Ammoniumsalze, enthalten, mit der Maßgabe, daß das Gewichtsverhältnis der Komponenten A : B : C = 1 - 6 : 0,2 - 1 : 0,4 - 4 beträgt. Vorzugsweise liegen die erfindungsgemäßen Wirkstoffgemische als homogene wäßrige Lösungen vor und enthalten vorzugsweise 5 bis 30 Gewichtsprozent der Komponenten A), 1 bis 5 Gewichtsprozent der Komponenten B) und 2 bis 20 Gewichtsprozent der Komponenten C). Besonders bevorzugt werden silikat- und magnesiumfreie Wirkstoffgemische in Form homogener, wäßriger Lösungen, enthaltend 10 bis 25 Gewichtsprozent der Komponenten A), 2 bis 3 Gewichtsprozent der Komponenten b) und 3,5 bis 17 Gewichtsprozent der Komponenten C).

Vorzugsweise werden Polyhydroxy- und/oder Hydroxycarbonsäuren mit 1 bis 6 Kohlenstoffatomen in der Kohlenstoffkette, gewünschtenfalls in Form ihrer Alkali- und/oder Ammoniumsalze eingesetzt. Besonders bevorzugt werden Gluconsäure, Natriumgluconat, Weinsäure und/oder Zitronensäure. Als Polyamin- und/oder Aminpolyphosphonsäuren, gewünschtenfalls in Form ihrer Alkali- und/oder Ammoniumsalze, eignen sich insbesondere Diethylentriaminpenta-(methylenphosphonsäure) (DTPMP), Ethylendiamintetra-(methylenphosphonsäure) (EDTMP), Hexamethylendiamintetra-(methylenphosphonsäure) und/oder Aminotri-(methylenphospon säure). Die in den erfindungsgemäßen Wirkstoffgemischen enthaltenen Polyacrylsäuren besitzen vorzugsweise molare Massen zwischen etwa 1000 und etwa 15000. Polyacrylsäuren mit molaren Massen zwischen etwa 3000 und etwa 8000 sind besonders geeignet.

Ein weiterer Gegenstand der Erfindung ist ein Verfahren zum Bleichen von Cellulosefasern, gewünschtenfalls in Kombination mit synthetischen Fasern, mit wäßrigen stabilisierten Wasserstoffperoxidlösungen dadurch gekennzeichnet, daß wäßrige alkalische Wasserstoffperoxidlösungen mit silikat- und magnesiumfreien Wirkstoffgemischen, enthaltend A) Polyhydroxy- und/oder Hydroxycarbonsäuren, gewünschtenfalls in Form ihrer Alkali- und/oder Ammoniumsalze, B) Polyacrylsäuren, gewünschtenfalls in teilneutralisierter Form und C) Polyamin- und/oder Aminpolyphosphonsäuren, gewünschtenfalls in Form ihrer Alkali- und/oder Ammoniumsalze, wobei das Gewichtsverhältnis der Komponenten A : B : C = 1 - 6 : 0,2 - 1 : 0,4 - 4 beträgt, stabilisiert werden. Die in den Verfahren eingesetzten erfindungsgemäßen Mischungen besitzen die weiter oben aufgeführten bevorzugten Verbindungen und Einsatzmengen. Bezogen auf die eingesetzten Mengen an wäßriger, 35 Gew.%iger Wasserstoffperoxidlösung werden die erfindungsgemäßen Wirkstoffgemische in Konzentrationen zwischen etwa 2 und etwa 25 % Aktivsubstanz eingesetzt. Der pH-Wert der stabilisierten, wäßrigen Wasserstoffperoxidlösungen liegt vorzugsweise zwischen etwa 9 und etwa 13.

Das Bleichen von Cellulosefasern wie Baumwolle, Leinen, Nessel und Jute sowie Mischungen bestehend aus Cellulosefasern und Synthesefasern, insbesondere Polyesterfasern, kann sowohl in langer Flotte beispielsweise auf Haspelkufen oder in kurzer Flotte wie bei Imprägnierverfahren erfolgen. Letztere Verfahren können einerseits als sogenannte Kaltbleiche durchgeführt werden, wozu die Bleichflotte längere Zeit in dem Bleichgut verweilt, andererseits kann das mit Bleichflotte imprägnierte Bleichgut in einer I-Box oder ähnlichen Anlagen auf Temperaturen oberhalb 100 °C aufgeheizt und dadurch eine Verkürzung der Bleichzeit erreicht werden. Das Bleichverfahren wird vorzugsweise bei Temperaturen zwischen etwa 15 °C und etwa 145 °C durchgeführt.

Um das Netzen der zu bleichenden Materialien zu beschleunigen, können der Bleichflotte noch Netzmittel zugesetzt werden. Hier kommen alle üblichen Substanzen in Frage, die in alkalischen Medien wirksam und mit den Bestandteilen der erfindungsgemäßen Stabilisatormischungen verträglich sind, wie anionische und/oder nichtionische Netzmittel. Als anionische Substanzen haben sich beispielsweise Fettsäuresulfonate, Alkylarylsulfonate und/oder Eiweißspaltprodukte bewährt. Geeignete nichtionische Netzmittel stellen Addukte von Alkylenoxid insbesondere Ethylenoxid, an beispielsweise Fettsäuren, Fettsäureamide, Fettalkoholen und/oder Alkylphenolen dar.

Als Bleichmittel werden vorzugsweise wäßrige Wasserstoffperoxidlösungen eingesetzt.

Beispiele

Zur Bestimmung des Weißgrades, der Entschlichtung, der Saugfähigkeit sowie des Enddurchschnittspolymerisationsgrades wurden folgende Testmethoden herangezogen:

1. Weißgradmessung - ermittelt als % Remission auf dem Elrepho-Gerät der Firma Zeiss mit Filter R 46.
2. Entschlichtungsgrad - laut Violett-Skala nach TEGEWA. Diese Skala reicht von 1 bis 9, wobei 9 absolute Schlichteentfernung bedeutet und ab Note 6 eine ausreichende Entschlichtung gegeben ist.
3. Saugfähigkeitstest nach DIN 53924 modifiziert - gemessen an 20 mm breiten Gewebestreifen in Kett-Richtung, nach 15, 30 und 60 Sekunden.
4. Durchschnittspolymerisationsgrad (DP) - nach der EWNN-Methode; DIN 54270 - T 3- 77.

Beispiel 1

Auf einem Laborfoulard (Mathis) wurde ein Rohgewebe 100 % Baumwolle mit der Bleichflotte imprägniert. Abquetscheffekt 87 %. Die Ware wurde aufgedockt und während 16 Stunden bei Raumtemperatur verweilt.

Alternativ kam dabei eine Imprägnierflotte folgender Zusammensetzung zum Einsatz.

a) Bisher übliche Bleichflottenzusammensetzung (Vergleich)

6 g/l Netzmittel
12 ml/l Wasserglas 38 °Bé
10 g NaOH 100 %
2 ml/l Komplexbildner
5 g Natriumpersulfat
60 ml/l Peroxid 35 %

b) Erfindungsgemäße Bleichflottenzusammensetzung

6 g/l Netzmittel
6 ml/l erfindungsgemäßer organischer Stabilisator, bestehend aus:
22,0 Gewichtsprozent Na-gluconat
3,0 Gewichtsprozent Polyacrylsäure, teilneutralisiert
3,5 Gewichtsprozent DTPMP

4,5 Gewichtsprozent NaOH 50 %
67,0 Gewichtsprozent vollentsalztem Wasser
12 g/l NaOH 100 %
5 g/l Natriumpersulfat
60 ml/l Peroxid 35 %

Ergebnis

|  | Weißgrad in % Remission | TEGEWA Note | Steighöhe in mm | | | DP-nach Sekunden Wert |
|---|---|---|---|---|---|---|
|  |  |  | 15 s | 30 s | 60 s |  |
| Rohware | 60,2 | 2 | 0 | 0 | 0 | 2670 |
| Rezeptur a) | 86,0 | 4 | 15 | 21 | 27 | 2560 |
| Rezeptur b) | 87,5 | 6–7 | 14 | 19 | 26 | 2480 |

Während bei Rezeptur a) die Entschlichtung noch völlig ungenügend war, wurde ein Entschlichtungsgrad nach Rezeptur b) erreicht, der bei allen nachfolgenden Behandlungsprozessen zu keinen Schwierigkeiten führt. Der Weißgrad war leicht verbessert, die Saugfähigkeit nahezu gleich; ebenso ergaben sich keine relevanten Unterschiede hinsichtlich des DP-Wertes.

Beispiel 2

Auf einem Laborfoulard (Mathis) und einer Technikumsdämpfanlage (Benz) wurde auf einem Baumwoll-Doppelgewebe eine Kaltbleiche mit einer anschließenden Peroxid-Schockbleiche durchgeführt.
Alternativ kamen bei der Kalt- wie auch bei der Schockbleiche Imprägnierflotten folgender Zusammensetzung zum Einsatz:

a) Bisher übliche Bleichflottenzusammensetzung (Vergleich)

1. Kaltbleiche

0,15 g/l $MgSO_4 . 7 H_2O$
12 ml/l Wasserglas 38 °Bé
12 g/l NaOH 100 %
8 g/l Netzmittel
2 ml/l Komplexbildner
5 g/l Natriumpersulfat
50 ml/l Peroxid 35 %
Flottenaufnahme: 82 %
20 Stunden Verweilzeit bei Raumtemperatur.
Anschließend wurde die Ware gewaschen und getrocknet.

2. Peroxid-Schockbleiche

0,15 g/l $MgSO_4 . 7 H_2O$
12 ml/l Wasserglas 38 °Bé
8 g/l NaOH 100 %
8 g/l Netzmittel
2 ml/l Komplexbildner
15 ml/l Peroxid 35 %
Flottenaufnahme 84 %
Reaktionszeit 90 Sekunden, Sattdampfatmosphäre 100 °C.
Anschließend wurde die Ware gewaschen und getrocknet.

b) Erfindungsgemäße Bleichflottenzusammensetzung

1. Kaltbleiche

12 g/l NaOH 100 %
6 ml/l erfindungsgemäßer organischer Stabilisator, bestehend aus:
17,0 Gewichtsprozent Na-gluconat
2,0 Gewichtsprozent Polyacrylsäure, teilneutralisiert
6,0 Gewichtsprozent DTPMP
4,5 Gewichtsprozent NaOH, 50 %

70,5 Gewichtsprozent vollentsalztem Wasser
8 g/l Netzmittel
5 g/l Natriumpersulfat
50 ml/l Peroxid 35 %
    Flottenaufnahme 84 %
20 Stunden Verweilzeit bei Raumtemperatur.
Anschließend wurde die Ware gewaschen und getrocknet.

2. Peroxid-Schockbleiche

    8 g/l NaOH 100 %
6 ml/l erfindungsgemäßer organischer Stabilisator, bestehend aus:
17,0 Gewichtsprozent Na-gluconat
2,0 Gewichtsprozent Polyacrylsäure, teilneutralisiert
6,0 Gewichtsprozent DTPMP
4,5 Gewichtsprozent NaOH, 50 %
70,5 Gewichtsprozent vollentsalztem Wasser
8 g/l Netzmittel
10 ml/l Peroxid 35 %
    Flottenaufnahme 84 %
Reaktionszeit 90 Sekunden, Sattdampfatmosphäre 100 °C
Anschließend wurde die Ware gewaschen und getrocknet.

Ergebnis

|  | Weißgrad in % Remission | TEGEWA Note | Steighöhe in mm 15 s | 30 s | 60 s | DP-nach Sekunden Wert |
|---|---|---|---|---|---|---|
| Rohware | 58,4 | 1 | 0 | 0 | 0 | 3070 |
| Rezeptur a) | 87,8 | 2 | 27 | 35 | 45 | 2800 |
| Rezeptur b) | 86,5 | 4–5 | 25 | 32 | 40 | 2680 |

Trotz des mit der erfindungsgemäßen Bleichflottenzusammensetzung erzielten hohen Weißgrades kam es gegenüber Rezeptur a) kaum zu einem größeren DP-Abfall. Die Entschlichtung war deutlich besser.

Beispiel 3

Auf einer Technikumsdämpfanlage (Benz) wurde eine hypochlorit-vorgebleichte Maschenware - Interlock 100 % Baumwolle - nach dem Imprägnieren mit der Peroxidbleichflotte während 30 Minuten bei 100 °C Sattdampfatmosphäre behandelt und anschließend heiß und kalt gewaschen.
    Alternativ kam daei eine Imprägnierflotte folgender Zusammensetzung zum Einsatz:

a) Bisher übliche Bleichflottenzusammensetzung (Vergleich)

    0,15 g/l $MgSO_4 \cdot 7 H_2O$
12 ml/l Wasserglas 38 °Bé
6 g/l NaOH 100 %
5 g/l Netzmittel
2 ml/l Komplexbildner
15 ml/l Peroxid 35 %
    Flottenaufnahme ca. 130 %

b) Erfindungsgemäße Bleichflottenzusammensetzung

    3 g/l NaOH 100 %
15 ml/l erfindungsgemäßer organischer Stabilisator, bestehend aus:
12,0 Gew.% Na-gluconat
2,6 Gew.% Polyacrylsäure
17,0 Gew.% EDTMP
68,4 Gew.% vollentsalztem Wasser
5 g/l Netzmittel
15 ml/l Peroxid 35 %

Flottenaufnahme ca. 130 %

Ergebnis

|  | Weißgrad in % Remission | Steighöhe in mm 15 s | 30 s | 60 s | DP-nach Sekunden Wert |
|---|---|---|---|---|---|
| Rohware | 58,4 | 0 | 0 | 0 | 2820 |
| nach Hypochloritbleiche | 77,4 | 0 | 0 | 0 | — |
| Peroxidbleiche Rezeptur a) | 93,1 | 25 | 33 | 43 | 2470 |
| Peroxidbleiche Rezeptur b) | 92,5 | 23 | 29 | 36 | 2370 |

Die Ergebnisse zeigen, daß mit der erfindungsgemäßen Bleichflottenzusammensetzung ein nahezu gleicher, sehr hoher Weißgrad bei einem noch überdurchschnittlichen Durchschnittspolymerisationsgrad erzielt wurde.

Beispiel 4

Auf einer Technikumsanlage (Benz) wurde ein entschlichtetes Baumwollgewebe nach dem Imprägnieren mit der Peroxidbleichflotte während 30 Minuten bei 100 °C Sattdampfatmosphäre behandelt und anschließend heiß und kalt ausgewaschen.
Alternativ kam dabei eine Imprägnierflotte folgender Zusammensetzung zum Einsatz:

a) Bisher übliche wasserglashaltige Bleichflottenzusammensetzung (Vergleich)

24ml/l Wasserglas 38 °Bé
14 ml/l NaOH 50 °Bé
4 g/l Netzmittel
2,4 ml/l Komplexbildner
35 ml/l Peroxid 35 %
Flottenaufnahme 100 %

b) Silikatfreie Bleichflottenzusammensetzung nach DE-PS 22 11 578

8 ml/l NaOH 50 °Bé
4 g/l Netzmittel
0,2 g/l DTPMP
4 g/l Gluconsäure
0,4 g/l Diethylentriaminpentaessigsäure
35 ml/l Peroxid 35 %
Flottenaufnahme 100 %

c) Erfindungsgemäße Bleichflottenzusammensetzung

5ml/l NaOH 50 °Bé
4 g/l Netzmittel
16 ml/l erfindungsgemäßer organischer Stabilisator, bestehend aus:
15,0 Gew.% Na-gluconat
3,0 Gew.% Polyacrylsäure
15,0 Gew.% EDTMP
67,0 Gew.% vollentsalztem Wasser
35 ml/l Peroxid 35 %
Flottenaufnahme 100 %

Ergebnis

| | Weißgrad in % Remission | DP-Wert | Restperoxid 35% ml/kg Ware |
|---|---|---|---|
| Rohware | 66,1 | 3320 | |
| Rezeptur a) | 88,0 | 2570 | 5 |
| Rezeptur b) | 85,1 | 2460 | 1 |
| Rezeptur c) | 86,9 | 2630 | 2,5 |

Die Ergebnisse zeigen, daß mit der erfindungsgemäßen Bleichflottenzusammensetzung ein höherer Weißgrad bei einem höheren End-Durchschnittspolymerisationsgrad sowohl gegenüber Rezeptur b) als auch gegenüber Rezeptur a) erzielt wurde.

**Patentansprüche**

1) Silikat- und magnesiumfreie Wirkstoffgemische zur Stabilisierung wäßriger Peroxidbleichbäder auf Basis organischer Säuren und/oder ihrer Salze, dadurch gekennzeichnet, daß sie als wesentliche Komponenten
A) Polyhydroxy- und/oder Hydroxycarbonsäuren, gewünschtenfalls in Form ihrer Alkali- und/oder Ammoniumsalze
B) Polyacrylsäuren, gewünschtenfalls in teilneutralisierter Form
C) Polyamin- und/oder
Aminpolyphosphonsäuren, gewünschtenfalls in Form ihrer Alkali- und/oder Ammoniumsalze
enthalten, mit der Maßgabe, daß das Gewichtsverhältnis der Komponenten A : B : C = 1 - 6 : 0,2 - 1 : 0,4 - 4 beträgt.
2) Wirkstoffgemische nach Anspruch 1, dadurch gekennzeichnet, daß sie als homogene, wäßrige Lösungen vorliegen und dabei 5 bis 30 Gewichtsprozent der Komponenten A), 1 bis 5 Gewichtsprozent der Komponenten B) und 2 bis 20 Gewichtsprozent der Komponenten C), vorzugsweise 10 bis 25 Gewichtsprozent der Komponenten A), 2 bis 3 Gewichtsprozent der Komponenten B) und 3,5 bis 17 Gewichtsprozent der Komponenten C), enthalten.
3) Wirkstoffgemische nach den Ansprüchen 1 und 2, dadurch gekennzeichnet, daß sie Polyacrylsäuren mit molaren Massen zwischen etwa 1000 und etwa 15000, vorzugsweise zwischen etwa 3000 und etwa 8000 enthalten.
4) Wirkstoffgemische nach den Ansprüchen 1 bis 3, dadurch gekennzeichnet, daß sie Polyhydrooxy- und/oder Hydroxycarbonsäuren mit 1 bis 6 Kohlenstoffatomen in der Kohlenstoffkette, gewünschtenfalls in Form ihrer Alkali- und/oder Ammoniumsalze, und vorzugsweise Gluconsäure, Natriumgluconat, Weinsäure und/oder Citronensäure enthalten.
5) Wirkstoffgemische nach den Ansprüchen 1 bis 4, dadurch gekennzeichnet, daß sie als Polyamin- und/oder Aminopolyphosphonsäuren, gewünschtenfalls in Form ihrer Alkali- und/oder Ammoniumsalze, Diethylentriaminpenta(methylenphosphonsäure), Ethylendiamintetra(methylenphosphonsäure), Hexamethylendiamintetra(methylenphosphonsäure) und/oder Aminotri(methylenphosphonsäure) enthalten.
6) Verfahren zum Bleichen von Cellulosefasern, gewünschtenfalls in Kombination mit synthetischen Fasern, mit wäßrigen stabilisierten Wasserstoffperoxidlösungen, dadurch gekennzeichnet, daß wäßrige, alkalische Wasserstoffperoxidlösungen mit silikat- und magnesiumfreien Wirkstoffgemischen, enthaltend die Komponenten A, B und C nach den Ansprüchen 1 bis 5, in Konzentrationen zwischen etwa 2 und etwa 25 % Aktivsubstanz, bezogen auf die eingesetzte Menge an wäßriger, 35 Gew.%iger Wasserstoffperoxidlösung, stabilisiert werden, wobei der pH-Wert insbesondere zwischen etwa 9 und etwa 13 liegt.
7) Verfahren nach Anspruch 6, dadurch gekennzeichnet, daß bei Temperaturen zwischen etwa 15 °C und etwa 145 °C gebleicht wird.

**Claims**

1. Silicate-free and magnesium-free stabilizer mixtures for stabilizing aqueous peroxide bleaching baths based on organic acids and/or salts thereof, characterized in that they contain as essential components
A) polyhydroxy- and/or hydroxycarboxylic acids, if desired in the form of their alkali and/or ammonium salts,
B) polyacrilic acids, if desired in partially neutralized form,
C) polyamine and/or amine polyphosphonic acids, if desired in the form of their alkali and/or ammonium salts,
with the proviso that the ratio by weight of components A:B:C is 1–6:0.2–:0.4–4.

2. Stabilizer mixtures as claimed in Claim 1, characterized in that they are homogenous aqueous solutions and contain from 5 to 30% by weight of component A), from 1 to 5% by weight of component B) and from 2 to 20% by weight of component C), preferably from 10 to 25% by weight of component A), from 2 to 3% by weight of component B) and from 3.5 to 17% by weight of component C).

3. Stabilizer mixtures as claimed in Claims 1 and 2, characterized in that they contain polyacrylic acids having gram molecular weights of from about 1000 to about 15 000 and preferably from about 3000 to about 8000.

4. Stabilizer mixtures as claimed in Claims 1 to 3, characterized in that they contain polyhydroxy- and/or hydroxycarboxylic acids containing from 1 to 6 carbon atoms in the carbon chain, if desired in the form of their alkali and/or ammonium salts, and preferably gluconic acid, sodium gluconate, tartaric acid and/or citric acid.

5. Stabilizer mixtures as claimed in Claims 1 to 4 characterized in that they contain as polyamine and/or amine polyphophonic acids, if desired in the form of their alkali and/or ammonium salts, diethylenetriamine penta-(methylenephosphonic acid), ethylenediamine tetra-(methylenephosphonic acid), hexamethylenediamine tetra-(methylenephosphonic acid) and/or aminotri-(methylenephosphonic acid).

6. A process for bleaching cellulose fibers, if desired in combination with synthetic fibers, with aqueous stabilized hydrogen peroxide solutions, characterized in that aqueous, alkaline hydrogen peroxide solutions are stabilized with silicate- and magnesium-free stabilizer mixtures containing components A, B and C according to Claims 1 to 5 in concentrations of from about 2 to about 25% active substance, based on the quantity of aqueous 35% by weight hydrogen peroxide solution used, the pH-value being in particular form about 9 to about 13.

7. A process as claimed in Claim 6, characterized in that bleaching is carried out at temperatures of from about 15°C to about 145°C.

**Revendications**

1. Mélanges de substances actives exempts de silicate et de magnésium, pour la stabilisation de bains de blanchiment aqueux au peroxyde, à base d'acides organiques et/ou de leurs sels, caractérisés en ce qu'ils sont constitués, comme composants essentiels, de:

A) acides polyhydroxy- et/ou hydroxycarboxyliques, éventuellement sous forme de leurs sels de métaux alcalins ou d'ammonium,

B) acides polyacryliques, éventuellement sous forme partiellement neutralisée,

C) acides polyamino- et/ou aminopolyphosphoniques, éventuellement sous forme de leurs sels de métaux alcalins ou d'ammonium, avec cette réserve que le rapport pondéral des composants A:B:C soit égal à 1–6:0,2–1:0,4–4.

2. Mélanges de substances actives selon la revendication 1, caractérisés en ce qu'ils se présentent sous forme de solutions aqueuses homogènes et en ce qu'ils contiennent 5 à 30 pour-cent en poids des composants A), 1 à 5 pour-cent en poids des composants B) et 2 à 20 pour-cent en poids de composants C), de préférence, 10 à 25 pour-cent en poids des composants A), 2 à 3 pour-cent en poids des composants B) et 3,5 à 17 pour-cent en poids des composants C).

3. Mélanges de substances actives selon les revendications 1 et 2, caractérisés en ce qu'ils sont constitués d'acides polyacryliques ayant des masses molaires comprises entre environ 1000 et environ 15 000, de préférence entre environ 3000 et environ 8000.

4. Mélanges de substances actives selon les revendications 1 à 3, caractérisés en ce qu'ils comprennent des acides polyhydroxy- et/ou des acides hydroxycarboxyliques contenant 1 à 6 atomes de carbone dans la chaîne carbonée, éventuellement sous forme de leurs sels de métaux alcalins et/ou d'ammonium, et de préférence, l'acide gluconique, le gluconate de sodium, l'acide tartrique et/ou l'acide citrique.

5. Mélanges de substances actives selon les revendications 1 à 4, caractérisés en ce qu'ils comprennent, comme acides polyamino- et/ou aminopolyphosphoniques, éventuellement sous forme de leurs sels de métaux alcalins et/ou d'ammonium, l'acide diethylène-triamino-pentaméthylène-phosphonique, l'acide éthylène-diamino-tetraméthylène-phosphonique et/ou l'acide amino-trimethylène-phosphonique.

6. Procédé de blanchiment de fibres cellulosiques, éventuellement en combinaison avec des fibres synthétiques, avec des solutions aqueuses stabilisées au peroxyde d'hydrogène, caractérisé en ce qui l'on stabilise des solutions alcalines aqueuses de peroxyde d'hydrogène avec des mélanges de substances actives exempts de silicate et de magnésium, contenant les composants A, B et C selon les revendications 1 à 5, dans des concentrations comprises entre environ 2 et environ 25% de substance active, rapporté sur la quantité de solution aqueuse de peroxyde d'hydrogène à 35% utilisée, le pH se situant en particulier entre environ 9 et environ 13.

7. Procédé selon la revendication 6, caractérisé en ce que l'on blanchit à des températures comprises entre environ 15°C et environ 145°C.